# EUROPÄISCHE PATENTSCHRIFT

(11) **EP 2 073 333 B1**
(45) Veröffentlichungstag und Bekanntmachung des Hinweises auf die Patenterteilung: **04.12.2013**
(21) Anmeldenummer: 08167599.3
(22) Anmeldetag: 27.10.2008
(51) Int. Cl.: H02G 1/12

(54) **Abisolierwerkzeug**
Isolating tool
Outil de dénudement

(30) Priorität: 21.12.2007 DE 202007017867 U
(43) Veröffentlichungstag der Anmeldung: 24.06.2009
(73) Patentinhaber: Weidmüller Interface GmbH & Co. KG, 32758 Detmold (DE)
(72) Erfinder: Hanning, Günther, 32758, Detmold (DE); Heggemann, Christian, 32758, Detmold (DE); Hetland, Detlev, 32760, Detmold (DE); Köster, Thomas, 33189, Schlangen (DE); Wedler, Andreas, 32756, Detmold (DE); Storm, Siegfried, 33189, Schlangen (DE)
(74) Vertreter: Dantz, Jan Henning

(56) Entgegenhaltungen:
- DE-A1- 1 640 632
- DE-A1- 1 665 296
- DE-A1- 2 827 587
- DE-C1- 4 420 050
- US-A- 3 596 541

## Beschreibung

Die vorliegende Erfindung betrifft ein Abisolierwerkzeug gemäß dem Oberbegriff des Anspruchs 1.

Ein gattungsgemäßes Abisolierwerkzeug ist aus der DE 44 20 050 C1 bekannt. Die dort gezeigte und beschriebene Konstruktion hat sich in der Praxis durchaus bewährt. Dabei ist das Abisolierwerkzeug so ausgebildet, dass zwei Abisolierorgane zwischen in einem durch Klemmbacken gebildeten Maul angeordnet und in Maullängsrichtung verschiebbar sind. Die Abisolierorgane weisen ein Paket aus nebeneinander liegenden Lamellen mit Schneidkanten auf, wobei an der Rückseite des Lamellenpaketes eine an das Profil eines Leiters angepasste Lamellenführungseinrichtung anliegt.

Nachteilig an diesem Abisolierwerkzeug ist, dass für verschiedene Kabel- bzw. Isolierschichtdicken eine dem jeweiligen Profil eines Leiters angepasste Lamellenführungseinrichtung in das Abisolierwerkzeug eingebaut werden muß, um ein optimales Abisolieren zu gewährleisten oder ein Durchtrennen des Kabels bzw. ein nur teilweises Abisolieren aufgrund einer nicht zum jeweiligen Kabelquerschnitt passenden Lamellenführungseinrichtung zu vermeiden.

Der Erfindung liegt die Aufgabe zugrunde, ein Abisolierwerkzeug zu entwickeln, das für die Abisolierung von Kabeln bei unterschiedlichsten Kabelquerschnitten geeignet ist.

Diese Aufgabe wird durch ein Abisolierwerkzeug mit den Merkmalen des Anspruchs 1 gelöst.

Mit dem erfindungsgemäßen Abisolierwerkzeug ist mit Hilfe des variabel einstellbaren Messerkissens ein leicht durchzuführendes Anpassen des Abisolierwerkzeugs an einen jeweiligen Leiterquerschnitt ermöglicht.

Weitere vorteilhafte Ausbildungen der Erfindung sind in den Unteransprüchen gekennzeichnet.

Nach einem Unteranspruch liegt durch die Anordnung des Messerkissens und der Messerlamellen in dem Messerhalter sowie die Gestalt des Messerkissens und der Messerlamellen 5 das Messerkissen sicher in dem Messerhalter. Außerdem ist das Messerkissen durch diese Anordnung leicht aus dem Messerhalter herausnehmbar. Bei Kabeln mit besonderer Leiterquerschnittgeometrie kann dadurch bei dem erfindungsgemäßen Abisolierwerkzeug in einfachster Weise ein für übliche Leiterquerschnittsgeometrien ausgelegtes Messerkissen durch ein dieser besonderen Geometrie angepasstes Messerkissen ausgetauscht werden.

Nachfolgend werden Ausführungsbeispiele anhand der beigefügten Zeichnungen beschrieben. Es zeigen:
- Fig. 1: eine perspektivische Ansicht des Kopfes einer Ausführungsform eines Abisolierwerkzeugs mit zwei Messerhaltern und abgenommener oberer Klemmbacke,
- Fig. 2: eine perspektivische Ansicht einer Ausführungsform eines Messerhalters mit Messerlamellen und Messerkissen,
- Fig. 3: eine perspektivische Detailansicht der Messerlamellen,
- Fig. 4: eine perspektivische Detailansicht einer Ausführungsform eines vorderen Teils des Messerhalters,
- Fig. 5: eine perspektivische Detailansicht des Messerkissens,
- Fig. 6: eine perspektivische Detailansicht einer Ausführungsform eines vorderen Teils des Messerhalters mit Messerkissen und darauf aufliegenden Messerlamellen mit der Stellung des Messerkissens entsprechendem Schneidprofil,
- Fig. 7: eine perspektivische Detailansicht des Messerkissens in der Stellung gemäß Fig. 5,
- Fig. 8: eine perspektivische Detailansicht einer Ausführungsform eines vorderen Teils des Messerhalters mit Messerkissen und darauf aufliegenden Messerlamellen mit der Stellung des Messerkissens entsprechendem Schneidprofil,
- Fig. 9: eine perspektivische Detailansicht des Messerkissens in der Stellung gemäß Fig. 7.

In der nachfolgenden Figurenbeschreibung beziehen sich Begriffe wie oben, unten, links, rechts, vorne, hinten usw. ausschließlich auf die in den jeweiligen Figuren gewählte beispielhafte Darstellung und Position der Zange. Diese Begriffe sind nicht einschränkend zu verstehen, d.h. in verschiedenen Arbeitsstellungen oder durch spiegelsymmetrische Auslegung oder dergleichen können sich diese Bezüge ändern.

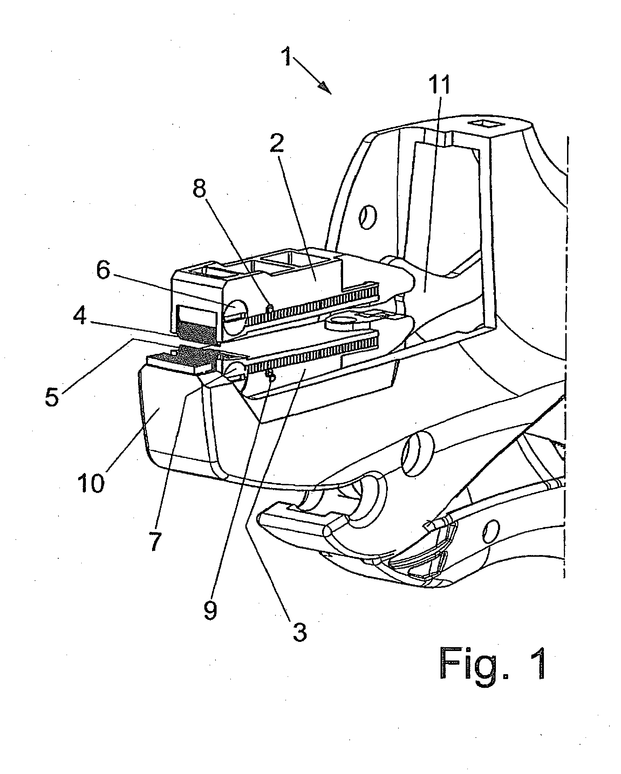

Figur 1 zeigt ein Kopfteil einer Ausführungsform eines Abisolierwerkzeuges 1 mit zwei Messerhaltern 2,3, die an ihrem rechten Ende an einer Zugstange 11 abnehmbar gehaltert sind. Mithilfe der Zugstange 11 werden die Messerhalter 2, 3 während der Betätigung des Abisolierwerkzeuges 1 parallel zur Längsachse der Messerhalter 2,3 zur Werkzeugmitte hin gezogen, um die Isolierschicht eines in das Abisolierwerkzeug 1 eingelegten Leiters von dem Leiter abzuziehen.

Die Messerhalter 2,3 sind in einem durch zwei Klemmbacken gebildeten Zangenmaul angeordnet, wobei in der Abbildung nur die untere Klemmbacke 10 zu sehen ist. Am linken Ende der Messerhalter 2,3 sind eine Reihe von Messerlamellen 4, 5 mit aus den Messerhaltern 2, 3 hervorstehenden Schneidkanten 13 nebeneinander angeordnet, die drehbar an den Messerhaltern 2, 3 gelagert sind. Zur Unterstützung der Messerlamellen 4, 5 sind Messerkissen 6,7 oberhalb bzw. unterhalb der Messerlamellen 4, 5 bevorzugt im dem Werkzeugmaul zugewandten Ende der Messerhalter 2,3 vorgesehen. Die Messerkissen 6, 7 sind drehbar in dem Abisolierwerkzeug 1 gelagert. Bevorzugt ist eine Unterbringung in den Messerhaltern 2, 3, denkbar ist aber auch eine Lagerung der Messerkissen 2, 3 in den das Werkzeugmaul bildenden Klemmbacken 10.

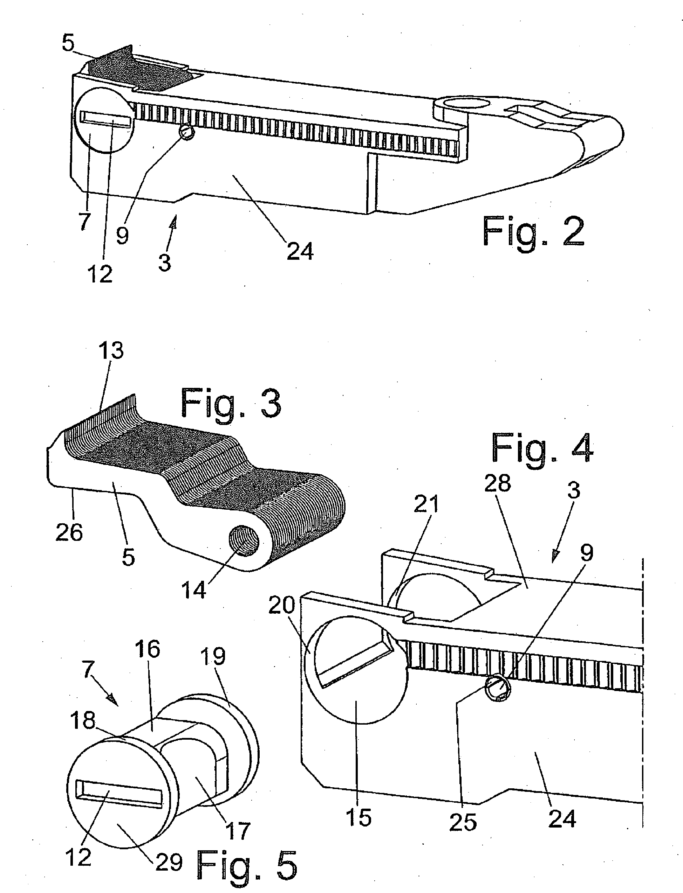

Die Figuren 2 bis 5 zeigen ein Ausführungsbeispiel eines solchen Messerhalters nochmals im Detail. Figur 3 zeigt eine Detailansicht der Messerlamellen 4, 5. Diese sind an einem Ende mit einer Bohrung 14 ausgebildet, die im eingebauten Zustand, wie in Fig. 2 zu erkennen, mit Bohrungen 25 in den Seitenflächen 24 der Messerhalter korrespondieren und durch die ein Stift 8,9 gesteckt ist, der eine Drehlagerung der Messerlamellen 4, 5 in dem Messerhalter 2, 3 um die Stiftlängsachse bewirkt. Die Messerlamellen 4, 5 haben in Längsachsenrichtung eine den räumlichen Anforderungen im Messerhalter 2, 3 entsprechende Kontur. Ein Teilbereich 26 dieser Kontur, welcher sich mit seiner Unterkante (in Figur 3) auf dem Messerkissen aufstützt, ist flach ausgebildet. Dadurch ist eine Anpassung des durch die einzelnen Schneidkanten 13 der nebeneinander liegenden Messerlamellen 4, 5 gebildeten Schneidprofils 22, 23 an die jeweilige den Messerlamellen 4, 5 zugewandte Kontur 26 des Messerkissens 6, 7 gewährleistet. Am anderen Ende der Messerlamellen 4, 5 sind die Schneidkanten 13 ausgebildet, die im eingebauten Zustand aus dem Messerhalter 2, 3 nach oben beziehungsweise nach unten hervorstehen, um in die Isolierschicht eines Leiters einzudringen.

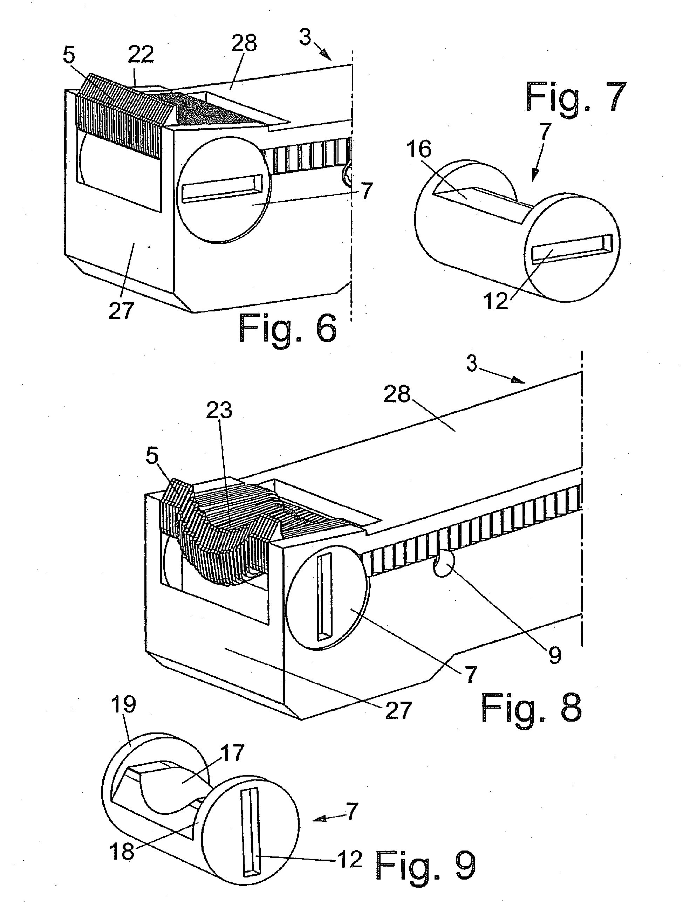

Figur 4 zeigt den Teil einer Ausführungsform eines Messerhalters 3, in den die Messerlamellen 5 und das Messerkissen 7 eingesetzt sind. Das Messerkissen 7 befindet sich am vorderen Ende des Messerhalters 3 in einer quer zur Längsachse des Messerhalters 3 ausgebildeten Bohrung 15. Diese Bohrung 15 ist zur Stirnfläche 27 (siehe Figuren 6 und 7) hin und zu der dem anderen Messerhalter gegenüberliegenden Fläche 28, aus der die Schneidkanten 13 der Messerlamellen 5 hervorstehen, offen. Die Seitenwände 24 des Messerhalters bilden so eine Führung für das Messerkissen 7, in der das Messerkissen 7 drehbar ist.

Figur 5 zeigt eine Detailansicht des Messerkissens 7. Dieses ist in der Grundform zylinderförmig ausgebildet. In mindestens einer der Stirnseiten des Messerkissens 7 ist ein Schlitz 12 ausgebildet, mit dem das Messerkissen unter zur Hilfenahme beispielsweise eines Schraubenziehers in die gewünschte Stellung in Messerhalter gebracht werden kann. Die an die Stirnseite 29 des Messerkissens 7 angrenzenden Mantelabschnitte dienen als Führungsflächen18, 19, die in den Innenseiten 20, 21 der Bohrung 15 geführt werden. Dadurch ist das Messerkissen 7 drehbar in dem Messerhalter 3 gelagert. Der übrige Teil des Mantels des Messerkissens 7 dient als Auflage für die Messerlamellen 5. Dabei ist die Mantelfläche des Messerkissens 7 so ausgebildet, dass sie unterschiedlich konturierte Abschnitte 16, 17 aufweist. So ist ein Teil der Mantelfläche des Messerkissens als Ebene 16 ausgebildet, um Leiter mit rechteckigen Querschnitten gut abisolieren zu können, ein anderer Teil der Mantelfläche 17 des Messerkissens 7 ist konkav ausgebildet, um dadurch eine Kontur des Schneidprofils 23 der Messerlamellen 5 zu erzeugen, das der Kontur eines im Querschnitt runden Leiters entspricht. Denkbar sind auch winklige Konturen zur Bearbeitung von beispielsweise dreieckigen oder vieleckigen Leiterquerschnitten.

Die Figuren 6 bis 9 zeigen Beispiele für die Stellung eines Messerkissens 7 in einem Messerhalter 3 und der dadurch bewirkten Schneidprofile 22, 23 des Messerkissens 7 im Messerhalter 3. Figur 6 zeigt ein gerades Schneidprofil 22, das am besten zum Abisolieren von Leitern mit rechteckigem Querschnitt geeignet ist. Zur Erzeugung dieses Schneidprofils durch die Schneidkanten 13 der Messerlamellen 5 ist das Messerkissen 7 so eingestellt, dass es mit seiner eben ausgebildeten Mantelfläche die Messerlamellen 5 stützt. Figur 8 zeigt ein kurviges Schneidprofil 23 der Schneidkanten 13 der Messerlamellen 5, dass durch eine in Figur 9 gezeigte Einstellung des Messerkissens bewirkt wird. Dabei ist das Messerkissen so ausgerichtet, dass es mit einer konkav geformten Mantelfläche die Messerlamellen stützt.

### Bezugszeichenliste

- 1: Abisolierwerkzeug
- 2: Messerhalter
- 3: Messerhalter
- 4: Messerlamellen
- 5: Messerlamellen
- 6: Messerkissen
- 7: Messerkissen
- 8: Stift
- 9: Stift
- 10: Klemmbacke
- 11: Zugstange
- 12: Schlitz
- 13: Schneidkante
- 14: Lagerbohrung
- 15: Messerkissenbett
- 16: Profilstück
- 17: Profilstück
- 18: Führungsfläche
- 19: Führungsfläche
- 20: Führungsfläche
- 21: Führungsfläche
- 22: Schneidprofil
- 23: Schneidprofil
- 24: Seitenwand
- 25: Bohrung
- 26: Teilbereich der Lamellenmesserkontur
- 27: Stirnfläche
- 28: Fläche
- 29: Stirnseite

## Patentansprüche

1. Abisolierwerkzeug mit zwei Messerhaltern (2, 3), die in einem durch zwei Klemmbacken (10) gebildeten Zangenmaul angeordnet sind, wobei mindestens einer der Messerhalter (2, 3) mehrere nebeneinander liegende Messerlamellen (4, 5) mit Schneidkanten (13) aufweist und die nebeneinander liegenden Schneidkanten (13) bei mindestens einem der Messerhalter (2, 3) durch Aufliegen der Messerlamellen (4, 5) auf einem Messerkissen (6, 7) ein dem Querschnitt eines abzuisolierenden Leiters angepasstes Profil ausbilden, **dadurch gekennzeichnet, dass** das Messerkissen (6, 7) drehbar gelagert ist.

2. Abisolierwerkzeug nach Anspruch 1, **dadurch gekennzeichnet, dass** das Messerkissen (6, 7) in dem Messerhalter (2, 3) drehbar gelagert ist.

3. Abisolierwerkzeug nach einem der vorstehenden Ansprüche, **dadurch gekennzeichnet, dass** die Messerlamellen (4, 5) in dem Messerhalter (2, 3) drehbar um einen Stift (8, 9) gelagert sind.

4. Abisolierwerkzeug nach einem der vorstehenden Ansprüche, **dadurch gekennzeichnet, dass** das Messerkissen (6, 7) zylinderförmig ausgebildet ist, wobei die Mantelfläche des zylinderförmigen Messerkissens (6, 7) als Auflage für die Messerlamellen (4, 5) dient.

5. Abisolierwerkzeug nach Anspruch4, **dadurch gekennzeichnet, dass** die Mantelfläche des Messerkissens (6, 7) unterschiedlich konturierte Profilstücke (16, 17) aufweist.

6. Abisolierwerkzeug nach Anspruch 4, **dadurch gekennzeichnet, dass** ein Profilstück (16) der Mantelfläche des Messerkissen (6, 7) als Ebene ausgebildet ist.

7. Abisolierwerkzeug nach Anspruch 4, **dadurch gekennzeichnet, dass** ein Profilstück (17) der Mantelfläche des Messerkissen (6, 7) konkav ausgebildet ist.

8. Abisolierwerkzeug nach Anspruch 4, **dadurch gekennzeichnet, dass** ein Profilstück der Mantelfläche des Messerkissen (6, 7) winklig ausgebildet ist.

9. Abisolierwerkzeug nach Anspruch 4, **dadurch gekennzeichnet, dass** das Messerkissen (6, 7) auf mindestens einer seiner Stirnseiten (29) einen Schlitz (12) aufweist.

## Claims

1. Insulating tool with two knife holders (2, 3) that are arranged in a pincers mouth constituted by two clamping jaws (10), whereby at least one of the knife holders (2, 3) has several side-by-side knife lamellae (4, 5) with cutting edges (13) and where the side-by-side knife edges (13) in at least one of the knife holders (2, 3), when the knife lamellae (4, 5) rest upon a knife pad (6, 7), constitute a profile adapted to the cross-section of a conductor that is to be insulated, **characterized in that** knife pads (6, 7) are positioned rotatably.

2. Insulating tool according to Claim 1, **characterized in that** knife pads (6, 7) are rotatably positioned in knife holder (2, 3).

3. Insulating tool according to one of the above claims, **characterized in that** the knife lamellae (4, 5) are positioned in knife holder (2, 3) rotatably around a pin (8, 9).

4. Insulating tool according to one of the above claims, **characterized in that** the knife pad (6, 7) has a cylindrical shape, whereby the casing surface of the cylindrical knife pad (6, 7) serves as a support for the knife lamellae (4, 5).

5. Insulating tool according to Claim 4, **characterized in that** the casing surface of the knife pad (6, 7) has differently contoured profile pieces (16, 17).

6. Insulating tool according to Claim 4, **characterized in that** a profile piece (16) of the casing surface of knife pad (6, 7) is made in the form of a plane.

7. Insulating tool according to Claim 4, **characterized in that** a profile piece (17) of the casing surface of knife pad (6, 7) has a concave shape.

8. Insulating tool according to Claim 4, **characterized in that** a profile piece of the casing surface of knife pad (6, 7) has an angular shape.

9. Insulating tool according to Claim 4, **characterized in that** knife pad (6, 7) on at least one of its front sides (29) has a slit (12).

## Revendications

1. Outil à dénuder avec deux porte-lames (2, 3) qui sont disposés dans une ouverture de pince formée par deux mors de serrage (10), l'un au moins des porte-lames (2, 3) comportant plusieurs lames en forme de lamelles (4, 5) disposées les unes à côté des autres et possédant des tranchants (13), et les tranchants (13) disposés les uns à côté des autres formant sur au moins un des porte-lames (2, 3), par l'appui des lames en forme de lamelles (4, 5) sur un coussinet à lames (6, 7), un profil adapté au conducteur à dénuder, **caractérisé en ce que** le coussinet à lames (6, 7) est supporté avec possibilité de rotation.

2. Outil à dénuder selon la revendication 1, **caractérisé en ce que** le coussinet à lames (6, 7) est disposé dans le porte-lames (2, 3) avec possibilité de rotation.

3. Outil à dénuder selon l'une des revendications précédentes, **caractérisé en ce que** les lames en forme de lamelles (4, 5) sont disposées dans le porte-lames (2, 3) avec possibilité de rotation autour d'une goupille (8, 9).

4. Outil à dénuder selon l'une des revendications précédentes, **caractérisé en ce que** le coussinet à lames (6, 7) est de forme cylindrique, les surfaces d'enveloppe du coussinet à lames (6, 7) cylindrique servant d'appui aux lames en forme de lamelles (4, 5).

5. Outil à dénuder selon la revendication 4, **caractérisé en ce que** la surface d'enveloppe du coussinet à lames (6, 7) présente des éléments profilés (16, 17) ayant des contours différents.

6. Outil à dénuder selon la revendication 4, **caractérisé en ce qu'**un élément profilé (16) de la surface d'enveloppe du coussinet à lames (6, 7) a une forme plane.

7. Outil à dénuder selon la revendication 4, **caractérisé en ce qu'**un élément profilé (17) de la surface d'enveloppe du coussinet à lames (6, 7) a une forme concave.

8. Outil à dénuder selon la revendication 4, **caractérisé en ce qu'**un élément profilé de la surface d'enveloppe du coussinet à lames (6, 7) a une forme en angle.

9. Outil à dénuder selon la revendication 4, **caractérisé en ce que** le coussinet à lames (6, 7) présente une fente (12) sur au moins une de ses faces d'extrémité (29).
